Europäisches Patentamt

European Patent Office

Office européen des brevets

(19)

(11) Veröffentlichungsnummer: **0 106 947**
**B1**

(12) ## EUROPÄISCHE PATENTSCHRIFT

(45) Veröffentlichungstag der Patentschrift:
09.04.86

(51) Int. Cl.⁴: **F 15 B  15/26**

(21) Anmeldenummer: **83107332.5**

(22) Anmeldetag: **26.07.83**

(54) **Doppelwirkender druckmittelbetätigter Arbeitszylinder.**

(30) Priorität: **22.10.82  DE 3239118**

(43) Veröffentlichungstag der Anmeldung:
**02.05.84 Patentblatt 84/18**

(45) Bekanntmachung des Hinweises auf die Patenterteilung:
**09.04.86 Patentblatt 86/15**

(84) Benannte Vertragsstaaten:
**AT CH DE FR GB IT LI NL SE**

(56) Entgegenhaltungen:
**DE - A - 2 005 144**
**DE - A - 2 327 387**
**GB - A - 922 157**
**US - A - 4 046 262**

(73) Patentinhaber: **WABCO Westinghouse Steuerungstechnik GmbH & Co.,**
**Bartweg 13 Postfach 91 12 70, D-3000 Hannover 91 (DE)**

(72) Erfinder: **Bernhardt, Bruno, Goerdelerstrasse 2/113,**
**D-7410 Reutlingen (DE)**
Erfinder: **Kedzierski, Heinrich, Dr., Am Wehr 9,**
**D-3015 Wennigsen (DE)**

(74) Vertreter: **Schrödter, Manfred, WABCO Westinghouse Fahrzeugbremsen GmbH Am Lindener**
**Hafen 21 Postfach 91 12 80, D-3000 Hannover 91 (DE)**

## Beschreibung

Die Erfindung betrifft einen doppeltwirkenden, druckmittelbetätigten Arbeitszylinder gemäß dem Oberbegriff des Patentanspruchs 1.

Doppeltwirkende, druckmittelbetätigte Arbeitszylinder werden z.B. als sogenannte Positionierungszylinder eingesetzt, bei denen der vom Druckmittel angetriebene Kolben automatisch an einer vorgegebenen Stelle angehalten wird. Für einen solchen Positionierungszylinder sind also einerseits Mittel zum Erkennen der Position des Kolbens an jeder beliebigen Stelle oder wenigstens an der vorgegebenen Stelle und andererseits Mittel zum Abbremsen und Anhalten des Kolbens bei Annäherung bzw. Erreichen der vorgegebenen Stellung erforderlich. Dabei ist es insbesondere erforderlich, den Kolben ausreichend schnell und ohne Überschwingen über die vorgegebene Position hinaus anhalten zu könne.

Ein Arbeitszylinder der eingangs genannten Art ist durch die DE—A—2005 144 bekannt. Dieser bekannte Arbeitszylinder ist so ausgebildet, daß er z.B. im Störungsfalle der Druckmittelsteuerung in jeder beliebigen Position des Kolbens mittels Blockierung des Spindeltreibs unverrückbar festgehalten werden kann. Die Vorgabe einer bestimmten Position, an der der Kolben dann selbsttätig stehen bleibt, ohne nennenswert über die vorgegebene Position hinauszuschwingen, ist bei dem bekannten Arbeitszylinder nicht möglich.

Der Erfindung liegt deshalb die Aufgabe zugrunde, einen Arbeitszylinder der eingangs genannten Art so zu verbessern, daß er als Positionierungszylinder verwendet werden kann, bei dem der Kolben schnell und exakt eine vorgegebene Position erreicht.

Diese Aufgabe wird durch die im Patentanspruch 1 angegebene Erfindung gelöst. Weiterbildungen und vorteilhafte Ausführungsformen der Erfindung sind in den Unteransprüchen angegeben.

Die Erfindung weist u.a. den Vorteil auf, daß bei einer weitgehenden Trennung des Abbrems-Vorganges einerseits und des Festsetzungs-Vorganges andererseits ein Überschwingen des Kolbens über eine vorgegebene Position praktisch vermeidbar ist. Das Festsetzen des aus der Welle und dem Kolben gebildeten Systems durch einen Eingriff an der Welle hat den Vorteil, daß sich die auf die gewünschte zu erreichende Position bezogene Genauigkeit des Festsetzens der Welle am Kolben um den Untersetzungsfaktor des Spindeltriebs erhöht auswirkt.

Wenn die Meßeinrichtung Mittel zur Erfassung der Drehbewegung und/oder der jeweiligen Stellung der Welle enthält, kann die Meßeinrichtung in sehr vorteilhafter Weise dazu verwendet werden, die Stellung des Kolbens bzw. der Kolbenstange sehr genau erkennen zu können. Der Spindeltrieb kann dann vorteilhaft die beiden Funktionen "Wegerfassung des Kolbens" und "Festsetzen des Kolbens" erfüllen. Auf diese Weise wird auch die Genauigkeit der Positionierung des Kolbens wesentlich verbessert. Als Mittel zur Erfassung der Drehbewegung und/oder der jeweiligen Stellung der Welle eignet sich u.a. sehr gut eine inkrementaler Winkelgeber, dessen Ausgangssignale der Steuereinrichtung zuführbar sind.

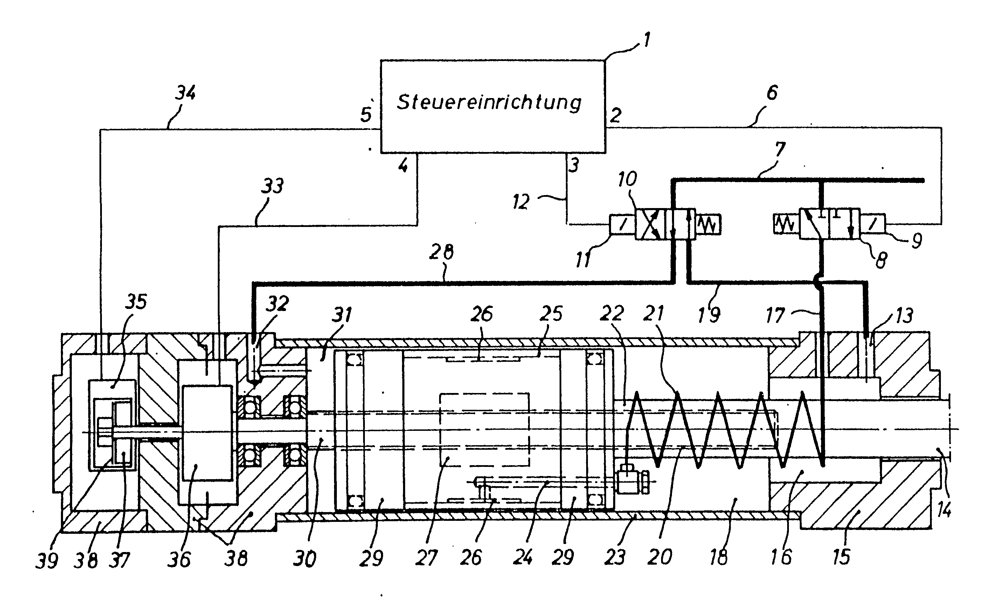

Die Erfindung wird an Hand eines Ausführungsbeispiels, das in der Zeichnung dargestellt ist, näher erläutert.

Die Zeichnung zeigt einen doppeltwirkenden Arbeitszylinder, der ein Zylinderrohr 23, einen Kolben 29 sowie zwei Zylinderdeckel 15 und 38 umfaßt. Der abgedichtet geführte Kolben 29 ist mit einer Kolbenstange 14 verbunden, die abgedichtet durch den Zylinderdeckel 15 gefüßt ist.

Der Kolben 29 trennt im Zylinder zwei Arbeitskammern 18 und 31, die mit einem Druckmittel beaufschlagt werden können. Im vorliegenden Fall dient als Druckmittel Druckluft, die über eine Druckmittelleitung 7 einem nicht dargestellten Vorratsbehälter entnommen wird.

Zur wechselweisen Beaufschlagung und Entlüftung der Arbeitskammern 18 und 31 dient ein 4/2-Wegeventil 10, das über einen Magneten 11 elektromagentisch betätigbar ist. Das Wegeventil 10 ist einerseits über eine Druckmittelleitung 28 und eine Bohrung 32 im Zylinderdeckel 38 mit der Arbeitskammer 31 verbunden und andererseits über eine Druckmittelleitung 19 und Bohrungen 13 und 16 im Zylinderdeckel 15 mit der Arbeitskammer 18 verbunden.

Der Kolben 29 ist mit einer Bremseinrichtung versehen, mittels derer er aus seiner Bewegung heraus abgebremst und somit verlangsamt werden kann. Diese Bremseinrichtung umfaßt Bremselemente, die auf dem Umfang des Kolbens verteilt sind und zwecks einer Abbremsung radial nach außen bewegbar sind, um mit der Zylinder-Innenwand in Reibschluß zu kommen. Die erwähnten Bremselemente werden von einem elastischen, aufweitbaren Mantel 25 des Kolbens 29 gebildet. Der Mantel 25 dichtet eine Druckmittel-Ringkammer 26 des Kolbens 29 ab, so daß er bei einer Beaufschlagung der Ringkammer 26 mit Druckluft aufgeweitet wird und mit der Zylinder-Innenwand in Reibschluß gebracht wird.

Die Ringkammer 26 ist über eine Bohrung 24 im Kolben 29, eine flexible, die Kolbenstange 14 umgebende Druckmittelleitung 21 sowie eine Druckmittelleitung 17 mit einem 3/2-Wegeventil 8 verbunden. Über das Wegeventil 8, das mittels eines Magneten 9 elektromagnetisch betätigbar ist, ist die Druckmittelleitung 17 wahlweise an die Druckmittelleitung 7 anschließbar oder entlüftbar.

Dies bedeutet, daß der durch Druckluft-Beaufschlagung in den Arbeitskammern 18 und 31 bewegbare Kolen 29 durch Betätigung des Wegeventils 8 abbremsbar ist. Durch die vergleichsweise große Reibfläche zwischen dem Mantel 25 des Kolbens 29 und der Zylinder-Innenwand ist es ohen weiteres möglich, den Kolben 29 auch bei einseitig aufrechterhaltener Druckluft-Beaufschlagung der Kammern 18 oder 31 abzubremsen.

Der Kolben 29 enthält in seinem Inneren einen Spindeltrieb 27, 30. Dieser Spindeltrieb ist so aufgebaut, daß eine im Innern des Kolbens 29 angeordnete, drehbar gelagerte Welle 30 bei einer axialen Bewegung des Kolbens 29 entsprechend der jeweiligen Bewegungsrichtung gedreht wird. Die koaxial zum Kolben 29 angeordnete Welle 30 ist mit ihrem einen Ende in einer Ausnehmung 20 des dem Kolben 29 zugewandten Teils 22 der Kolbenstange 14 und mit ihrem anderen Ende im Zyluinderdeckel 38 angeordnet bzw. gelagert.

Im Zylinderdeckel 38 ist eine Feststell-Einrichtung 36 angeordnet, die die Welle 30 umgibt und die über eine elektrische Leitung 33 ansteuerbar ist. Die Feststell-Einrichtung 36 ist so ausgebildet, daß bei einer entsprechenden Ansteuerung mit einem elektrischen Signal ein Festsetzen der Welle 30 bewirkt wird. Die festgesetzte Welle 30 blockiert über den entsprechend ausgebildeten Spindeltrieb 27, 30 auch die axiale Bewegung des Kolbens 29.

Damit ist der mittels des aufweitbaren Mantels 25 abgebremste Kolben 29 anschließend mittels der Feststell-Einrichtung 36 festsetzbar. Dies bedeutet, daß die Feststell-Einrichung 36 so ausgebildet werden kann, daß sie den Kolben 29 nur aus einer schon erheblich verlangsamten bzw. schon fast beendeten Bewegung heraus festsetzen muß. Dies bedeutet zugleich, daß das Festsetzen des Kolbens 29 unabhängig ist vom Einfluß der bei der Bremseinrichtung 25, 26 wirkenden Parameter (z.B. Druck der Druckluft in der Ringkammer 26, Reibwertschwankungen) und somit nahezu beliebig exakt festgesetzt werden kann.

Auf der Welle 30 befindet sich ferner eine Meßeinrichtung 35 zur Erfassung der Drehbewegung und/oder der jeweiligen Stellung der Welle 30. Mit der Erfassung der Stellung der Welle 30 ist dann auch die in axialer Richtung gemessene Stellung des Kolbens 29 erfaßt. In vorteilhafter Weise enthält die Meßeinrichtung 35 eine Scheibe 39 mit Markierungen, die von einem Sensor 37 eines inkrementalen Winkelgebers abgetastet werden. Die Meßeinrichtung 35 erzeugt Ausgangssignale, die die Stellung der Welle 30 und somit des Kolbens 29 darstellen und die auf eine elektrische Leitung 34 gegeben werden. Die Ausgangssignale der Meßeinrichtung 35 werden über die erwähnte elektrische Leitung 34 einem Eingang 5 einer Steuer einrichtung 1 zugeführt.

Die Steuereinrichtung 1 enthält eine Vergleichseinrichtung, die den über die elektrische Leitung 34 zugeführten Ist-Wert der Kolben-Stellung mit einem vorgebbaren Soll-Wert vergleicht. In Abhängigkeit von der Differenz zwischen Soll-Wert und Ist-Wert wird der Kolben 29 bei Annäherung an die vorgegebene gewünschte Position mittels der Bremseinrichtung 25, 26 verlangsamt und schließlich bei Erreichen der vorgegebenen Position mittels der Feststell-Einrichtung 36 festgesetzt.

Zu dem vorstehend angegebenen Zweck weist die Steuereinrichtung 1 einen Steuerausgang 2 auf, der über eine elektrische Leitung 6 mit dem Magneten 9 des Wegeventils 8 verbunden ist. Damit ist das Wegeventil 8 und somit auch die Bremseinrichtung 25, 26 über den Steuerausgang 2 der Steuereinrichtung 1 ansteuerbar.

Ein weiter Steuerausgang 4 der Steuereinrichtung 1 ist über die elektrische Leitung 33 mit der Feststell-Einrichtung 36 verbunden, so daß die Feststell-Einrichtung 36 ebenfalls von der Steuereinrichtung 1 ansteuerbar ist.

Schließlich weist die Steuereinrichtung 1 einen Steuerausgang 3 auf, der über eine elektrische Leitung 12 mit dem Magneten 11 des Wegeventils 10 verbunden ist. Auf diese Weise ist das Wegeventil 10 und damit die Bewegung des Kolbens 29 durch die Steuereinrichtung 1 steuerbar.

Die Steuereinrichtung 1 kann so aufgebaut sein, daß z.B. mittels eines Mikrocomputers und eines entsprechenden Programmes der gesamte Bewegungsablauf des Kolbens 29 unter Vorgabe einer gewünschten Position, insbesondere auch unter der zusätzlichen Vorgabe bestimmter Bewegungsphasen (langsam, schnell) gesteuert wird.

Es ist auch möglich, die Steuereinrichtung 1 so zu vereinfachen, daß sie bei Erreichen eines bestimmten Abstandes des Kolbens 29 von der zu erreichenden Position im Sinne einer Folgesteuerung ein vorgegebenes Bremsprogramm erzeugt, wobei das endgültige Festsetzen des Kolbens 29 mittels der Feststell-Einrichtung 36 entweder automatisch in der Folgesteuerung oder unter Verwendung eines zusätzlichen Signals bei Erreichen der gewünschten Position erfolgt. Bei einem solchen Aufbau der Steuereinrichtung 1 kann die Annäherung des Kolbens 29 an die gewünschte Position auch über einen externen Weggeber (z.B. Anschlag für den Kolben oder die Kolbenstange) erfolgen. In diesem Fall wird als Meßeinrichtung statt des beschriebenen inkrementalen Weggebers der externe Weggeber verwendet.

Die beschriebene Einrichtung kann auch so aufgebaut werden, daß statt des ausweitbaren Mantels 25 eine andere bekannte Einrichtung zum Abbremsen bzw. Verlangsamen des Kolbens 29 verwendet wird. Eine solche Einrichtung könnte z.B. mit elektromganetisch oder mechanisch betätigten Bremselementen für den Kolben arbeiten. Es ist auch möglich, den Kolben mit gesteuerter Gegenluft in der abtriebsseitigen Arbeitskammer abzubremsen.

Die beschriebene Erfindung ist auch bei einem kolbenstangenlosen Zylinder anwendbar, bei dem statt einer Kolbenstange ein durch einen Schlitz des Zylinders herausgeführter Mitnehmer oder ein vom Kolben angetriebenes und über Rollen gelenktes Mitnehmer-Band vorgesehen ist.

Statt der elektrischen direkten Ansteuerung der Feststell-Einrichtung 36 über eine elektrische Leitung 33 ist z.B. auch eine pneumatische Betätigung der Feststell-Einrichtung 36 möglich. In diesem Fall steuert die Steuereinrichtung 1 ein Magnetventil zur pneumatischen Druckmittel-Beaufschlagung entsprechender Betätigungselemente in der Feststell-Einrichtung an.

Der erfinderungsgemäße Arbeitszylinder bewährt sich in vorteilhafter Weise auch als Vorschub-Zylinder, der unter Last gesteuert (bewegt und zielgenau gebremst und angehalten) werden kann.

Es hat sich gezeigt, daß der erfindungsgemäße Arbeitszylinder ohne besondere Maßnahmen zur Sicherung gegen ein Verdrehen des Kolbens mit der gewünschten Genauigkeit arbeitet. Für den Fall, daß eine solche Maßnahme zum Verhindern einer Drehbewegung des Kolbens dennoch erforderlich oder zweckmäßig erscheint, empfiehlt sich eine im Querschnitt profilierte (z.B. mehreckige) Kolbenstange, die entsprechend geführt ist.

## Patentansprüche

1. Doppeltwirkender, druckmittelbetätigter Arbeitszylinder mit folgenden Merkmalen:

a) es ist eine im Zylindergehäuse (15, 23, 38) drehbar gelagerte Welle (30) vorgesehen, die über einen Spindeltrieb (27) mit dem Kolben (29) des Arbeitszylinders in Wirkverbindung steht und von diesem bei einer axialen Bewegung entsprechend der jeweiligen Bewegungsrichtung gedreht wird;

b) es ist eine steuerbare Feststell-Einrichtung (36) zum Festsetzen der Welle (30) vorgesehen;

c) der Spindeltrieb (27) ist so ausgebildet, daß der Kolben (29) mittels des Festsetzens der Welle (30) festsetzbar ist; gekennzeichnet durch folgende Merkmale;

d) zusätzlich zu der Feststell-Einrichtung (36) ist eine steuerbare Bremseinrichtung (25, 26) zum Abbremsen des Kolbens (29) vorgesehen;

e) es ist eine Meßeinrichtung (35) zur Erfassung der jeweiligen oder einer bestimmten Stellung des Kolbens (29) und zur Bildung eines Stellungs — Istwert — Signals vorgesehen;

f) es ist eine Steuereinrichtung (1) vorgesehen, der einerseits das Ausgangssignal der Meßeinrichtung (35) und andererseits ein Sollwert-Signal für eine gewünschte Position des Kolbens (29) zugeführt werden;

g) die Steuereinrichtung (1) dient zur Steuerung der Feststell-Einrichtung (36) und der Bremseinrichtung (25, 26), derart, daß bei Annäherung des Kolbens (29) an die vorgegebene Position der Kolben zunächst mittels der Bremseinrichtung (25, 26) verlangsamt wird und beim Erreichen der vorgegebenen Position die Feststell-Einrichtung (36) wirksam wird.

2. Arbeitszylinder nach Anspruch 1, dadurch gekennzeichnet, daß die Meßeinrichtung (35) Mittel zur Erfassung der Drehbewegung und/oder der jeweiligen Stellung der Welle (30) enthält.

3. Arbeitszylinder nach Anspruch 1 oder 2, gekennzeichnet durch folgende Merkmale:

a) die Bremseinrichtung enthält Bremselemente (25), die über wenigstens einen Teil des Umfangs des Kolbens (29) verteilt angeordnet sind;

b) die Bremselemente (25) sind in Abhängigkeit von einem Steuersignal radial bewegbar und in Reibschluß mit der Zylinder-Innenwand bringbar.

4. Arbeitszylinder nach wenigstens einem der vorhergehenden Ansprüche, dadurch gekennzeichnet, daß die Meßeinrichtung (35) eine an der Welle (30) befestigte Scheibe (39) mit Markierungen und einen die Markierungen der Scheibe (39) abtastenden Sensor (37) eines inkrementalen Winkelgebers umfaßt.

5. Arbeitszylinder nach Anspruch 3 oder den Ansprüchen 3 und 4, dadurch gekennzeichnet, daß die Bremselemente von einem mittels Druckmittel aufweitbaren Mantel (25) des Kolbens (29) gebildet sind.

6. Arbeitszylinder nach wenigstens einem der vorhergehenden Ansprüche, dadurch gekennzeichnet, daß die Welle (30) koaxial zu einer Kolbenstange (14) des Kolbens (29) angeordnet ist.

7. Arbeitszylinder nach Anspruch 5, dadurch gekennzeichnet, daß die Welle (30) wenigstens zum Teil in der hohl ausgebildeten Kolbenstange (14) des Kolbens (29) angeordnet ist.

8. Arbeitszylinder nach Anspruch 7, gekennzeichnet durch folgende Merkmale:

a) die hohl ausgebildete und einen Teil der Welle (30) aufnehmende Kolbenstange (14) ist auf der einen Seite des Kolbens (29) angeordnet;

b) die die Welle (30) umgebende Feststell-Einrichtung (36) ist auf der anderen Seite des Kolbens angeordnet.

9. Arbeitszylinder nach wenigstens einem der vorhergehenden Ansprüche, dadurch gekennzeichnet, daß der Spindeltrieb (27) im Kolben (29) angeordnet ist.

10. Arbeitszylinder nach wenigstens einem der vorhergehenden Ansprüche, dadurch gekennzeichnet, daß die Steuereinrichtung (1) einen Mikrocomputer enthält, dessen Ausgangsdaten zur Steuerung der Feststell-Einrichtung (36) und der Bremseinrichtung (25, 26) dienen.

## Revendications

1. Vérin à double effet, actionné par fluide de pression, présentant les caractéristiques suivantes:

a) dans l'enceinte (15, 23, 38) du vérin, il est prévu, en liaison active avec le piston (29) du vérin par l'intermédiaire d'un entraînement par vis (27), un arbre (30) qui est monté à rotation et qui est déplacé en rotation par celui-ci, lors d'un mouvement axial, en correspondance avec la direction du mouvement;

b) il est prévu, pour immobiliser l'arbre (30), un dispositif d'immobilisation (36) pouvant être commandé;

c) l'entraînement par vis (27) est réalisé de façon que le piston (29) puisse être immobilisé au moyen de l'immobilisation de l'arbre (30); caractérisé par les caractéristiques suivantes:

d) il est prévu, en plus du dispositif d'immobilisation (36), un dispositif de freinage (25, 26) pouvant être commandé, pour freiner le piston (29);

e) il est prévu un dispositif de mesure (35) pour mesurer la position momentanée du piston (29) ou une position déterminée de celui-ci, et pour former un signal de valeur effective de position;

f) il est prévu un dispositif de commande (1) auquel sont amenés, d'une part, le signal de sortie du dispositif de mesure (35) et, d'autre part, un signal de valeur de consigne pour une position désirée du piston (29);

g) le dispositif de commande (1) sert à commander le dispositif d'immobilisation (36) et le dispositif de freinage (25, 26) de façon que lors de l'approche du piston (29) de la position prédéterminée le piston soit d'abord ralenti au moyen du dispositif de freinage (25, 26) et que, lorsque la position prédéterminée est atteinte, le dispositif d'immobilisation (36) prenne effet.

2. Vérin selon la revendication 1, caractérisé en ce que le dispositif de mesure (35) contient des moyens pour mesurer le mouvement de rotation et/ou la position momentanée de l'arbre (30).

3. Vérin selon la revendication 1 ou 2, caractérisé par les caractéristiques suivantes:

a) le dispositif de freinage contient des éléments de freinage (25) qui sont agencés en étant répartis sur au moins une partie du pourtour du piston (29);

b) les éléments de freinage (25) peuvent, en fonction d'un signal de commande, être déplacés radialement et mis en liaison de frottement avec la paroi intérieure du cylindre.

4. Vérin selon au moins l'une des revendications précédentes, caractérisé en ce que le dispositif de mesure (35) comporte un disque (39) fixé à l'arbre (30) et doté de marques, et un transmetteur (37) qui décèle les marques du disque (39) et qui appartient à un transmetteur d'ange incrémental.

5. Vérin selon la revendication 3 ou les revendications 3 et 4, caractérisé en ce que les éléments de freinage sont constitués par une chemise (25) du piston (29), laquelle peut être dilatée au moyen de fluide de pression.

6. Vérin selon au moins l'une des revendications précédentes, caractérisé en ce que l'arbre (30) est agencé coaxialement à une tige de piston (14) du piston (29).

7. Vérin selon la revendication (6), caractérisé en ce que l'arbre (30) est agencé au moins en partie dans le tige (14) du piston (29) qui est creuse.

8. Vérin selon la revendication 7, caractérisé par les caractéristiques suivantes:

a) la tige de piston creuse (14) recevant une partie de l'arbre (30) est agencée d'un côté du piston (29);

b) le dispositif d'immobilisation (36) entourant l'arbre (30) est agencé de l'autre côté du piston.

9. Vérin selon au moins une des revendications précédentes caractérisé en ce que l'entraînement par vis (27) est agencé dans le piston (29).

10. Vérin selon au moins une des revendications précédentes caractérisé en ce que le dispositif de commande (1) contient un microcalculateur dont les données de sortie servent à commander le dispositif d'immobilisation (36) et le dispositif de freinage (25, 26).

## Claims

1. Double-acting working cylinder actuated by a pressure medium and having the following features:

a) a shaft (30) is provided which is rotatably mounted in the cylinder housing (15, 23, 38) and is in operative connection via a spindle drive (27) with the piston (29) of the working cylinder and is rotated by axial movement of this piston in accordance with the particular direction of movement;

b) a controllable locking device (36) is provided for fixing the shaft (30) in position;

c) the spindle drive (27) is designed in such a manner that the piston (29) can be fixed in position by fixing the shaft (30);

characterised by the following features:

d) in addition to the locking device (36), a controllable braking device (25, 26) is provided for braking the piston (29);

e) a measuring device (35) is provided for detecting the actual position of the piston (29) or whether it is in a specific position and for forming an actual value signal for the position of the piston;

f) a control device (1) is provided to which is fed on the one hand the output signal of the measuring device (35) and on the other hand a set value signal for a desired position of the piston (29);

g) the control device (1) serves to control the locking device (36) and the braking device (25, 26) in such a manner that, when the piston (29) approaches the preset position, the piston is first slowed down by means of the braking device (25, 26) and, when the preset position is reached, the locking device (36) becomes operative.

2. Working cylinder according to claim 1, characterised in that the measuring device (35) contains means for detecting the rotational movement and/or the actual position of the shaft (30).

3. Working cylinder according to claim 1 or 2, characterised by the following features:

a) the braking device contains braking. members (25) which are distributed over at least part of the circumference of the piston (29);

b) the braking members (25) can be moved radially in dependence on a control signal and can be brought into frictional engagement with the inner wall of the cylinder.

4. Working cylinder according to at least one of the preceding claims, characterised in that the measuring device (35) comprises a plate (39) which is fastened to the shaft (30) and has markings, and a sensor (37) of an incremental angle indicator, which sensor scans the markings of the plate (39).

5. Working cylinder according to claim 3 or claims 3 and 4, characterised in that the braking members are formed by a casing (25) of the piston (29), which casing can be expanded by means of a pressure medium.

6. Working cylinder according to at least one of the preceding claims, characterised in that the shaft (30) is arranged coaxially with a piston rod (14) of the piston (29).

7. Working cylinder according to claim 6, characterised in that the shaft (30) is arranged at least partially in the hollow rod piston rod (14) of the piston (29).

8. Working cylinder according to claim 7, characterised by the following features:

a) the hollow piston rod (14) which accommodates part of the shaft (30) is arranged on one side of the piston (29);

b) the locking device (36) which surrounds the shaft (30) is arranged on the other side of the piston.

9. Working cylinder according to at least one of the preceding claims, characterised in that the spindle drive (27) is arranged in the piston (29).

10. Working cylinder according to at least one of the preceding claims, characterised in that the control device (1) contains a microcomputer, the output data of which serve to control the locking device (36) and the braking device (25, 26).